# EUROPEAN PATENT APPLICATION

(11) **EP 1 130 703 A2**
(43) Date of publication of application: **05.09.2001**
(21) Application number: 01301607.6
(22) Date of filing: 22.02.2001
(51) Int. Cl.: H01S 3/098, H01S 5/065, G02B 5/18

(54) **Hybrid semiconductor-dielectric chirped saturable absorber mirror**

(30) Priority: 29.02.2000 US 515812
(71) Applicant: Agere Systems Optoelectronics Guardian Corporation, Orlando, Florida 32819-8698 (US)
(72) Inventor: Knox, Wayne Harvey, Holmdel, New Jersey 07733 (US); Krausz, Ferenc, 1-2331 Voesendorf (AT); Tempea, Gabriel Florin, 1080 Vienna (AT)
(74) Representative: Perkins, Sarah

(57) **Abstract**

High reflectance, saturable absorption and prescribed group delay dispersion (GDD) are provided over a broad bandwidth by a hybrid structure 10 consisting of a multilayer semiconductive stack 11 and a multilayer dielectric stack 12. Both the semiconductive layers and the dielectric layers vary in thickness and the layer thickness modulation is used to provide a desired dispersion and bandwidth. Additionally, the index of refraction of the semiconductive layers is varied along the stack similarly to control the bandwidth and dispersion. The reflector is used as a Q-switch to mode lock or Q-switch a laser.

## Description

### FIELD OF THE INVENTION

This invention relates to saturable absorbing elements and, more particularly, to such elements employing both semiconductor and dielectric layers.

### BACKGROUND OF THE INVENTION

Mode-locking elements for ultrafast solid state lasers substantially rely on semiconductor saturable absorbers. Ultrafast lasers generate pulses exhibiting widths in the picosecond down to the sub-10-femtosecond range. Such pulses have found applicability in fields like high-speed data processing, communications, spectroscopy, and, more recently, nonlinear frequency conversion.

Passive mode locking can be achieved by placing a saturable absorber either inside the laser cavity or in an external optical cavity coupled to the laser cavity. Saturable absorbers exhibit a dependence of the absorption on the intensity of the incident radiation; they become transparent for incident radiation having an intensity higher than the saturation intensity. As a consequence of this property, saturable absorbers absorb the weak incident radiation and favor (in a laser) the high-intensity mode corresponding to the mode-locked regime.

Bragg semiconductor saturable absorber mirrors have a bandwidth of about 60nm@850nm ("Mode-Locking Ultrafast Solid-State Lasers with Saturable Bragg Reflectors," IEEE Journal of Selected Topics in Quantum Electronics Vol. 2 #3, September 1996), far below the minimum of 200nm@800nm necessary for sub-10-fs pulse generation. This required bandwidth could be achieved by means of a hybrid structure consisting of a semiconductor Bragg reflector coated with a silver layer on the backside ("Semiconductor Saturable Absorber Mirrors (SESAMs) for Femtosecond to Nanosecond Pulse Generation in Solid-State Lasers," IEEE Journal of Selected Topics in Quantum Electronics Vol. 2 #3, September 1996). The losses introduced by the Ag-layer can not be tolerated in a number of applications, like high-quality cavity lasers or solid-state lasers using low-grain media. Manufacturing this hybrid structure involves considerable technological inconveniences as the GaAs substrate has to be etched before the Ag-layer can be coated. Drawing on the experience with dielectric mirrors, one would expect that the bandwidth of semiconductor multilayers can be easily increased by chirping or modulating the layer thickness ("Chirped Multilayer Coatings for Broadband Dispersion Control in Femtosecond Lasers," Optics Letters, Vol. 19 #4, February 1994). However, the chirp mirror technology is not straightforward to implement with semiconductor materials (e.g., AlAs/AlGaAs) on one hand because the ratio between the refractive indices is low, on the other because the reflectance at the air interface (⁻30%) can lead to Gires-Tournois interference effects in the absence of an efficient AR-coating. A chirped mirror has been demonstrated that consists of 120 semiconductor layers and 6-layer dielectric antireflection coating, having a bandwidth of 10THz ("Double-Chirped Semiconductor Mirror for Dispersion Compensation in Femtosecond Lasers," paper CtuR5, Conference on Lasers and Electrooptics, May 23 - 28, Baltimore, MD, USA). However this is a relatively narrow bandwidth and there is need for a saturable Bragg reflector of wider bandwidth for use in a mode-locked laser. This invention serves to satisfy this need.

### SUMMARY OF THE INVENTION

The present invention provides a broadband saturable Bragg reflector suitable for use in mode locking a laser to provide either sub-to-fs femtosecond or relatively longer pulses that can be tuned over a wide band of wavelengths.

A saturable Bragg reflector in accordance with the invention preferably comprises a monolithically integrated multilayer stack that comprises three sections. The first serves as a suitable substrate for supporting the other sections. The second section comprises a plurality of semiconductive layers, alternately of a relatively higher refractive index material, such as AlₓGa₁₋ₓAs, and of a relatively lower refractive index material such as AlAs. The layers are grown epitaxially on the substrate and vary in thickness and in the value of X along the substrate. Generally the layers increase in thickness and decrease in the value of X with distance away from the top of the stack. The primary purpose of varying the mole concentration X is the enhancement of the spectral bandwidth; apart from contributing to the bandwidth enhancement varying the layer thickness offers a means of controlling the Group Delay Dispersion (GDD) introduced by the device. In particular, in order to introduce negative GDD, the thickness of successive layers is decreased from the thickness at the substrate approximately one quarter the wavelength of the upper edge of the desired wavelength band to a thickness approximately one quarter the wavelength of the lower edge of the desired band. Most frequently, it is advantageous for these changes not to be monotonic, for example, to minimize undesirable resonances that may otherwise arise or to optimize the dispersion characteristic.

A separate feature in accordance with the invention that permits both an increase in the effective bandwidth and the achievement of a smooth GDD-characteristic is the addition to the stack of the third section that serves both to partially reflect the shorter wavelength portion of the spectrum and to match the impedance of the second section to that of the atmosphere for the long wavelengths. In one embodiment, the mirror consists of 82 semiconductive layers alternately of AlₓGa₁₋ₓAs and AlAs on a GaAs substrate and timeline dielectric layers alternately of a relatively lower refractive index material, such as silicon dioxide and a relatively higher index material such as silicon nitride.

An embodiment of the present invention will now be described by way of example with reference to the accompanying drawings.

### BRIEF DESCRIPTION OF THE DRAWING

FIG. 1 shows a simplified schematic of the hybrid semi-conductor-dielectric chirped saturable absorber mirror in accordance with the invention.

FIG. 2 shows the reflectance of the dielectric smooth edge-filter (on a GaAs-substrate) and the reflectance of the complete structure.

FIG. 3 depicts the group delay dispersion introduced by one bounce off the hybrid mirror of FIG. 1.

FIG. 4 depicts a laser system utilizing the mirror of FIG. 1.

### DETAILED DESCRIPTION

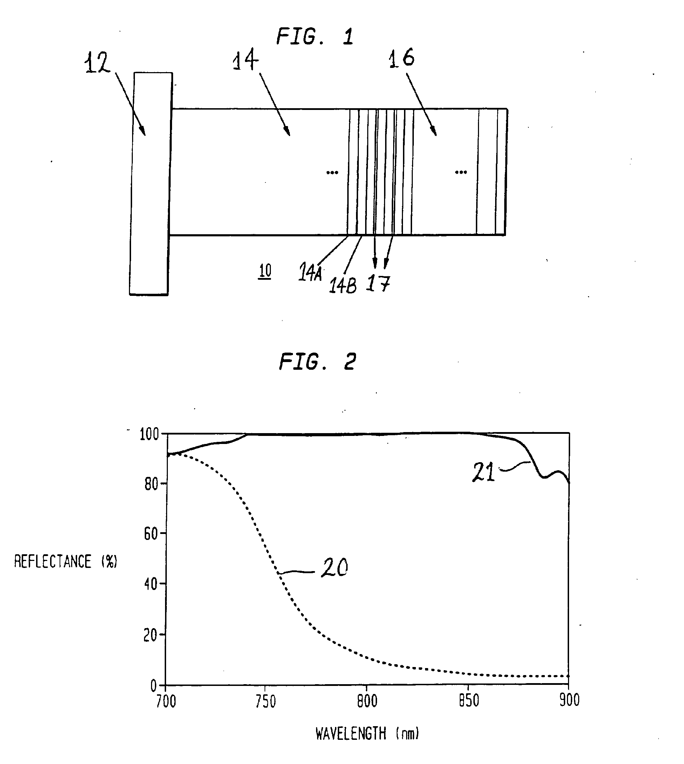

With reference now to the drawing, FIG. 1 shows the basic elements of a saturable absorption Bragg reflector 10 suitable for use as an end mirror in an optical cavity housing a laser medium for providing a mode-locked laser.

It comprises a monolithic integrated multilayer stack of three basic sections. The first section 12 is the substrate and is advantageously of monocrystalline gallium arsenide. The second section 14 comprises a multilayer stack alternately of AlₓGa₁₋ₓAs layers 14A and AlAs layers 14B, that have been grown epitaxially on the substrate 12, typically by some form of molecular beam epitaxy. The third section 16 is a multilayer stack of dielectric layers advantageously alternately of silicon nitride and silicon dioxide that serves as a smooth edge-filter

One of the factors that inherently limit the bandwidth of the semiconductor stack (section 14) is the modest value of the ration between the refractive index of AlₓGA₁₋ₓAs and that of AlAs. Decreasing the mole fraction x of the compound AlₓGA₁₋ₓAs would increase the value of this ratio but would also shift the absorption edge of the material into the infrared. In a chirped mirror aimed to introduce negative GDD, the penetration depth of the wavepackets decreases with decreasing wavelength: on the other hand AlₓGA₁₋ₓAs with a large Ga-fraction exhibits stronger absorption at the short-wavelength edge of the spectrum. It follows that in a mirror that introduces negative GDD the Ga-concentration in the AlₓGA₁₋ₓAs layers can be increased from the top layers towards the substrate without impairing the stack's reflection.

Additionally, to provide saturable absorption, there are included one or more quantum wells 17 within the top layers, typically in the low index layers, of the semiconductor section in regions of high intensity of the optical signal. Alternatively, as is described in EP-A-1071179
it can be advantageous to locate the quantum wells in high index layers of a quarter wavelength thickness that are located between pairs of low index layers of one eighth wavelength thickness. The saturation intensity is determined both by the location of the quantum well, the higher in the stack the lower the saturation intensity, and the transmittance of the dielectric edge-filter provided by the second section. The spectral reflectance of the dielectric edge-filter provides some control of the spectral distribution of the saturable absorption.

In FIG. 2, the curve 20 shows the reflectance of the dielectric smooth edge-filter as a GaAs substrate and the curve 21 shows the reflectance of the complete structure of the exemplary stack structure described above.

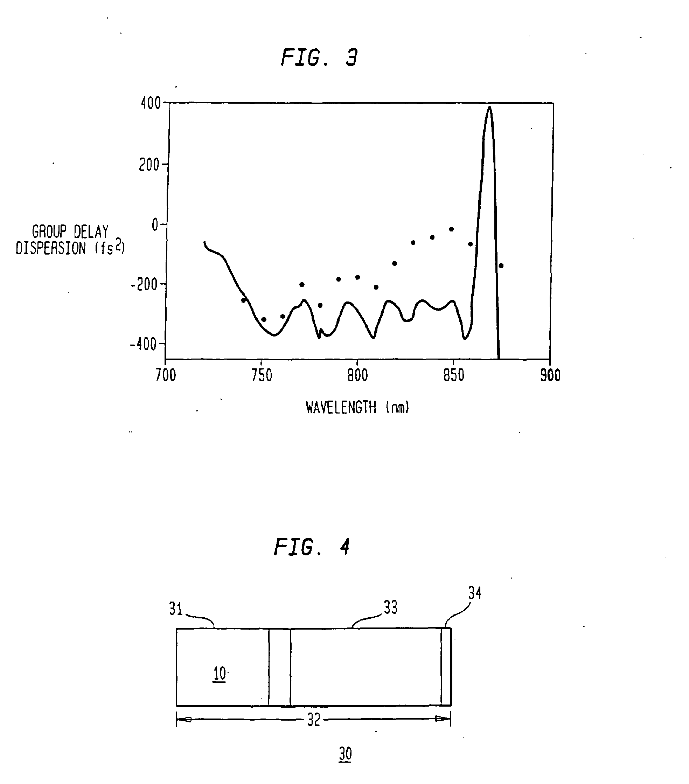

In FIG. 3, there is depicted the group delay dispersion 24 introduced by.one bounce off the exemplary stack structure.

In FIG. 4, there are shown the basic elements of a Q-switched laser system 30 that includes a saturable Bragg reflector 10 of the kind shown in FIG. 1 as one end mirror 31 of the optical cavity 32 within which is positioned the laser medium 33, which typically would be a solid state rod that is optically pumped, of the kind of well known in the art. A partially transmissive mirror 34 serves as the other end of the optical cavity 32 from which exit the laser pulses for utilisation. Omitted have been the various other elements that would normally be included within the system to provide focusing and control of the wavelength at which the laser operates.

In saturable reflectors to be used in long wavelength lasers, it may be advantageous to include at the top of the stack of semiconductive layers an odd number of halfwavelength strain relief layers having sufficient dislocations to act reflectively as non-radiative recombination sources and to locate a quantum well in such layer. This feature is described more fully in U.S. patent 5,701,327 that issued on December 23, 1997 entitled *Saturable Bragg Reflector Structure and Process for Fabricating the Same.*

In a copending application filed contemporaneously with this application and having the same assignees, the layers involving a ternary composition are formed by digital alloy modulation.

In an application filed contemporaneously with this application and including common assignees, there is described a digital alloy modulation process for forming the layers of ternary compositions with varying X by depositing the layers as planes of binary compounds.

It should be understood that the specific embodiment of saturable Bragg reflector described is merely illustrative of the general principles of the invention. Various other semiconductors or dielectrics may be substituted for the specific ones described.

## Claims

1. An optical device for use in mode-locking a laser comprising:
a monolithically integrated stack comprising at least first and second sections,
the first section comprising a substrate for the second section,
the second section comprising a plurality of semiconductive layers epitaxially grown on the substrate, the layers being alternately of a layer of semiconductive material of relatively low index of refraction and of a layer of semiconductive material having a relatively high index of refraction, the layers of relatively low high index varying in index with increasing distance from the substrate and the thicknesses of the layers increasing varying with distance from the substrate for achieving either a prescribed reflectance characteristic or simultaneously a desired reflectance characteristic and a desired group delay dispersion characteristic for the device.

2. The optical device of claim 1 in which the monolithically integrated stack includes a third section,
the third section comprising a plurality of dielectric layers for forming a smooth edge-filter, the thickness of the layers varying with distance from the substrate for achieving either a prescribed reflectance characteristic or simultaneously a desired reflectance characteristic and a desired group delay dispersion characteristic for the device.

3. The optical device of claim 1 in which the thicknesses of the layers generally decrease on the average with increasing distance from the substrate.

4. The optical device of claim 1 or claim 3 in which the index of the layers of relatively low index generally decreases with distance from the substrate.

5. The optical device of claim 3 in which the stack includes a plurality of dielectric layers for forming a smooth edge-filter whose thicknessess increase with increasing distance along the stack for matching the impedance of the second section to that of an atmosphere in the long-wavelength part of the high reflectance band of the mirror spectrum and partially reflecting the short-wavelength spectral region of said spectrum.

6. The optical device of claim 1 in which the semiconducting layers of relatively high index are of Alₓ GA₁₋ₓAs and the semiconductive layers of relatively low index are of AlAs.

7. The optical device of claim 6 in which the value of X decreases with increasing distance from the substrate.

8. The optical device of claim 7 in which the monolithically integrated stack includes a third section that comprises a dielectric smooth edge-filter.

9. The optical device of claim 8 in which the dielectric smooth edge-filter comprises a plurality of dielectric layers alternately of high and low index of refraction.

10. An optical device in accordance with claim 9 in which the dielectric layers are of silicon oxide and silicon nitride.

11. The optical device of any of the preceding claims in which at least one quantum well has been inserted in the plurality of semiconductive layers to provide saturable absorption.

12. A mode-locked laser comprising an optical cavity comprising a pair of opposed mirrors. one of the mirrors being an optical device as claimed in any of the preceding claims, and a laser medium positioned within the optical cavity.
